# EUROPÄISCHE PATENTSCHRIFT

(11) **EP 2 596 904 B1**
(45) Veröffentlichungstag und Bekanntmachung des Hinweises auf die Patenterteilung: **27.02.2019**
(21) Anmeldenummer: 11190192.2
(22) Anmeldetag: 22.11.2011
(51) Int. Cl.: B25J 11/00, B23P 19/04

(54) **Positionsgenau variable Stringerpositionierung**
Precise variable stringer positioning
Positionnement de chaîne variable et précis

(43) Veröffentlichungstag der Anmeldung: 29.05.2013
(73) Patentinhaber: FFT Produktionssysteme GmbH & Co. KG, 36041 Fulda (DE)
(72) Erfinder: Schaafhausen, Wilfried, 88045 Friedrichshafen (DE); Motzkau, Günter, 88045 Friedrichshafen (DE); Wehn, Alexander Mike, 57334 Bad Laasphe (DE)
(74) Vertreter: SSM Sandmair

(56) Entgegenhaltungen:
- EP-A2- 0 431 827
- EP-A2- 2 388 194
- DE-A1- 10 232 447
- DE-A1-102004 056 286
- JP-A- 2006 131 058
- US-A1- 2004 093 731

## Beschreibung

Die Erfindung betrifft ein Fügewerkzeug zur positionsgenauen Positionierung eines Profilkörpers auf einem Bauteil mittels eines Industrieroboters und zum Fügen des Profilkörpers mit dem Bauteil mittels verschwenkbarer Führungs- und/oder Andrückrollen.

Im Stand der Technik sind Vorrichtungen bekannt, mit denen Stringer mit einer Positioniergenauigkeit von bis zu 99,7% mit einem Bauteil verbunden werden können. Dabei kommen Greif- und Fügewerkzeuge zum Einsatz, die einen Stringer einer bestimmten Geometrie greifen und auf dem Bauteil ablegen können. Anschließend wird der Stringer mit dem Bauteil mittels des gleichen oder eines anderen Werkzeugs gefügt. Insbesondere bei sehr langen Bauteilen entspricht diese Genauigkeit nicht mehr den Anforderungen zum Beispiel der Luftfahrtindustrie, da bei einer Länge eines Stringers von zum Beispiel 18 m eine Abweichung von bis zu 4 mm auftreten kann.

Die EP 0 431 827 A2 betrifft eine Vorrichtung zum automatischen Verbinden eines elastischen Profils mit einem Steg, zum Beispiel zum Anbringen einer Dichtung an einer Autotür. Die Vorrichtung kann mit einem Roboterarm verbunden und zusammen mit dem Roboterarm entlang der Kontur der Autotür geführt werden. Die DE 102 32 447 A1 betrifft eine Vorrichtung zum Fügen eines leistenförmigen, nachgiebigen Profils, beispielsweise einer Dichtung, neben einer insbesondere gekrümmten Kante eines Körpers. Die US 2004/0093731 A1 betrifft eine Anlage und eine Vorrichtung, mit der Strukturteile miteinander verbunden werden können. Die Vorrichtung kann an einem Roboterarm befestigt werden und weist ein Verbindungswerkzeug mit zwei miteinander kooperierenden Werkzeugköpfen auf, von denen der eine Werkzeugkopf mehrere Werkzeuge zum Bohren von Löchern und zum Einsetzen und Verformen von Nieten aufweist, während der andere Werkzeugkopf dazu dient, die zur Verformung der Niete notwendigen Kräfte aufzunehmen. Die JP 2006 131058 A betrifft eine Vorrichtung zum Einbringen einer Gummidichtung in einen Fensterrahmen eines Autofensters. Die DE 10 2004 056 286 A1 betrifft eine Vorrichtung zum form- und/oder abmessungsunabhängigen Zusammenführen von mehreren Einzelkomponenten eines dreidimensionalen Körpers, die im Raum zueinander positionierbar sind. Die Vorrichtung umfasst wenigstens eine Messeinrichtung, mit deren Hilfe die Position wenigstens einer der Einzelkomponenten im Raum präzise erfasst und mittels einer Positioniereinrichtung in eine vorgegebene Position bewegt werden kann. Die EP 2 388 194 A2 betrifft eine Anlage und eine Vorrichtung, mit der Strukturteile, wie Platten und Versteifungsrippen oder Stringer, miteinander verbunden werden können.

Es ist eine Aufgabe der Erfindung, ein Fügewerkzeug zur Verfügung zu stellen, das Profilkörper unterschiedlicher Geometrie mit dem Bauteil positionsgenau fügen kann.

Diese Aufgabe wird mit der Vorrichtung des Anspruchs 1 gelöst.

Die Erfindung betrifft ein Fügewerkzeug, das im Folgenden auch als Werkzeug bezeichnet ist, zum positionsgenauen Fügen eines Profilkörpers, zum Beispiel eines Stringers, mit einem Bauteil. Das Bauteil kann beispielsweise die Zellenwand eines Luftfahrzeugs und der Profilkörper ein sogenannter Stringer zur Verstärkung oder Versteifung der Zellenwand sein.

Das Werkzeug weist einen Andockport auf, mit dem es automatisch mit einem Industrieroboter in bekannter Weise angedockt und von diesem abgedockt werden kann.

Optional kann das Werkzeug einen Greifer aufweisen, mit dem der Profilkörper zum Beispiel an einer Bereitstellungsvorrichtung oder einem Lager gegriffen werden kann. Der Greifer ist so ausgelegt, dass er nach dem Greifen den Profilkörper halten, zum Bauteil transportieren und dort positionieren kann.

Das Werkzeug weist weiterhin eine Vorrichtung, mit der der Profilkörper auf die ihm zugewandte Oberseite des Bauteils gedrückt werden kann, und optional eine Vorrichtung auf, mit der der Profilkörper und/oder das Bauteil aktiviert werden können, um eine dauerhafte Verbindung miteinander einzugehen.

Schließlich weist das Werkzeug Führungsrollen auf, die beim Fügen an den vom Bauteil abragenden Seitenwänden oder Seitenstegen des Profilkörpers anliegen bzw. auf diesen abrollen. Die Führungsrollen bzw. deren Position können automatisch an unterschiedliche Formen eines Profilkörpers und/oder an Profilkörper mit unterschiedlichen Formen angepasst werden.

Bei dem Profilkörper handelt es sich um einen Stringer. Unter Stringer wird hier ein langer Profilkörper verstanden, der zur Verstärkung oder Versteifung von großflächigen instabilen Platten oder anderen Flächenstrukturen mit diesen verbunden werden kann. Bei dem Profilkörper kann es sich um einen Hohlprofilkörper mit einer offenen Seite handeln, wobei die offene Seite bevorzugt auf das erste Bauteil aufgelegt wird und seitlich nach außen abragende Profilflansche oder einzelne Verbindungspads aufweist, über die der Profilkörper mit der Flächenstruktur verbunden wird. Der Profilkörper kann aber auch ein Vollkörper mit einer Unterseite, über die er mit der Flächenstruktur verbunden werden kann, sein.

Das Greifwerkzeug, das über den Roboter ansteuerbar ist, ist bevorzugt so ausgelegt, dass es Profilkörper oder Stringer unterschiedlicher Geometrie greifen kann. Bei Profilkörpern mit einem Hohlprofil kann es ausreichen, dass der Greifer in das Hohlprofil hineinfährt und das Hohlprofil beim Anheben lose auf dem Greifer zu liegen kommt. Bevorzugt greift der Greifer den Profilkörper aktiv, so dass er vor dem Beginn des Fügens eine Greif- und Halteposition mit dem Profilkörper wieder lösen muss. Bei Profilkörpern mit einem Vollprofil muss der Greifer fähig sein, das Profil aktiv zu greifen, zum Beispiel wie eine Zange. Nach der Positionierung des Profilkörpers auf dem Bauteil und dem Lösen des Greifers wird der Greifer bevorzugt mit dem Fügewerkzeug beim Fügen in die Fügerichtung mit bewegt.

Da die Profilkörper oder Stringer in der Regel Bauteile mit einer großen Länge und einer geringen Breite und Höhe sind, wird zum Transport der Stringer vom Bereitstellungsort zum zweiten Bauteil eine Vorrichtung benutzt, die den Stringer an jedem Ende mit je einem Greifer greift und hält. Der eine Greifer kann dabei durch das erfindungsgemäße Werkzeug mitgebildet werden, der zweite Greifer ist ein bekannter Greifer und wird in der Regel von einem zweiten Industrieroboter, der mit dem das Werkzeug führenden Industrieroboter verbunden ist, im Raum bewegt. Solch eine Vorrichtung ist aus der DE 10 2010 029 094 A1 bekannt, bei der es sich um eine Anmeldung der Anmelderin handelt, deren Inhalt hier ausdrücklich in Bezug genommen wird.

Bei besonders langen Profilkörpern mit einer Länge von zum Beispiel 20 m oder mehr kann wenigstens ein weiterer Roboter zum Einsatz kommen, der den Profilkörper in etwa in der Mitte unterstützt, um ein mittiges Abbiegen oder Abbrechen des Profilkörpers zu vermeiden. Zur Verkürzung der Produktionszeit können die beiden Werkzeuge, die den Profilkörper an den Enden greifen und halten, als Fügewerkzeuge ausgebildet sein, die aufeinander zulaufen und dabei den Profilkörper von beiden Seiten gleichzeitig mit dem Bauteil fügen. Eine weitere Verkürzung der Produktionszeit kann durch weitere Roboter, die jeweils mit einem Fügewerkzeug ausgerüstet und in Reihe geschaltet sind, erreicht werden.

Bei der Vorrichtung zum Andrücken des Profilkörpers oder Stringers handelt es sich um wenigstens einen Andrückkörper, zum Beispiel eine einzige Andrückrolle. Nur eine Andrückrolle kann ausreichend sein, wenn es sich bei dem Profilkörper um einen Vollkörper oder ein weitestgehend biegesteifes, bevorzugt allseitig geschlossenes Hohlprofil (zum Beispiel ein Mehr-, Vier- oder Dreikantprofil und/oder ein abgerundetes Profil) handelt. In diesem Fall kann die Andrückrolle auf die Oberseite des Profilkörpers drücken und dadurch den Profilkörper mit seiner Unterseite auf das Bauteil drücken. Die Verwendung nur einer Andrückrolle hat den Vorteil, dass die Krafteinleitung in den Profilkörper mittig erfolgt, wenn die Rolle zentral auf der Oberseite des Profilkörpers läuft. Außerdem wird eine Verschmutzung der Andrückrolle vermieden, da sie nicht in der Ebene der Aktivierungsvorrichtung liegt. Der Profilkörper kann schmale, geschwungene und/oder laschenartige Anklebestege aufweisen. Mit einer einzigen Andrückrolle sind auch zum Beispiel Kurven bzw. gekrümmte Profilkörper oder Stringer besser handhabbar.

Bei einem Profilkörper, der zum Beispiel als Hohlprofil mit offener Unterseite ausgebildet ist, weist die Vorrichtung bevorzugt wenigstens ein Paar Andrückrollen auf, die beidseitig des Profilkörpers die Profilkanten, den Anklebesteg oder die Verbindungspads auf das Bauteil drücken.

Das Werkzeug kann in Fügerichtung auch mehr als eine Andrückrolle bzw. ein Andrückrollenpaar hintereinander aufweisen. Die Andrückrolle oder die Andrückrollen kann bzw. können einzeln drehangetrieben sein und zusätzlich einen Linearantrieb aufweisen, der die Rolle(n) senkrecht auf das Bauteil zu bzw. von diesem weg bewegt und dadurch die Anpresskraft der Rolle verändert. Des Weiteren können sie einen Linearantrieb aufweisen, mit dem sie aufeinander zu und voneinander weg verfahrbar sind, um an unterschiedlich breite Profilkörper und/oder Profilkörperflansche bzw. Verbindungspads angepasst zu werden. Es kann bzw. können auch eine oder mehrere Andrückrollen nebeneinander auf einer gemeinsamen Achse angeordnet sein, die zum Andrücken auf die Profilkörperflansche oder Verbindungspads zum Beispiel abgesenkt werden kann bzw. einzeln abgesenkt werden können.

Bei der Vorrichtung zum Aktivieren des Profilkörpers und/oder des Bauteils handelt es sich um eine Vorrichtung, die zum Beispiel durch Zufuhr von Wärme, Strahlung oder Druck die Unterseite des Profilkörpers mit der ihr zugewandten Seite des Bauteils bevorzugt dauerhaft verbindet. Grundsätzlich kann die Andrückvorrichtung gleichzeitig auch die Aktivierungsvorrichtung bilden. Bevorzugt ist es aber, wenn die Aktivierungsvorrichtung eine eigene Vorrichtung ist, die unabhängig von der Andrückvorrichtung ansteuerbar ist.

Um die dauerhafte Verbindung des Profilkörpers mit dem Bauteil herzustellen, kann der Profilkörper und/oder das Bauteil aus einem Material bestehen, das im obigen Sinne aktiviert werden kann, das heißt, eine dauerfeste Verbindung zwischen den Teilen zum Beispiel durch Zufuhr von Wärme ermöglicht. Der Profilkörper und/oder das Bauteil kann bzw. können aber auch eine aktivierbare Schicht aufweisen, die durch die Aktivierungsvorrichtung aktiviert wird und die dauerhafte Verbindung der beiden Teile herstellt.

Bei einem Profilkörper mit einer durchgehenden Profilkante kann die Aktivierungsvorrichtung kontinuierlich Kontakt zu der Profilkante haben und während des gesamten Fügevorgangs aktiv sein. Bei Profilkörpern mit Verbindungspads kann die Aktivierungsvorrichtung beim Verfahren von einem Verbindungspad zum nächsten Verbindungspad inaktiv sein und erst aktiviert werden, wenn sie direkt über dem Verbindungspad liegt. Zum Beispiel kann sich die Aktivierungsvorrichtung in der Verfahrposition am Werkzeug in einem Abstand über der Stringerkante bzw. dem Verbindungspad befinden, aus der sie zum Aktivieren am Aktivierungsort nach unten abgesenkt wird, um in Fügekontakt mit dem Verbindungspad zu gelangen. Die Aktivierungsvorrichtung kann auch seitlich verschwenkbar sein oder in einer konstanten Höhe über der Profilkante oder den Verbindungspads geführt werden. Dabei kann sie während des gesamten Fügevorgangs oder getaktet aktiv sein oder je nach Bedarf an- und abgeschaltet werden.

Die Aktivierungsvorrichtung kann wie zur Andrückvorrichtung beschrieben mittels eines Linearantriebs auf unterschiedliche Profilkörperbreiten angepasst werden. Wenn das Fügewerkzeug eine Andrückvorrichtung und eine Aktivierungsvorrichtung aufweist, können beide Vorrichtungen auch mittels eines gemeinsamen Antriebs in Richtungen quer zur Fügerichtung verstellt werden.

Das Werkzeug weist weiterhin Führungsrollen auf, die beim Fügen seitlich an den vom Bauteil abragenden Seiten des Profilkörpers anliegen bzw. auf diesen abrollen, wobei der Abstand zwischen den beiden Führungsrollen an unterschiedliche Geometrien des Profilkörpers anpassbar ist. Die Führungsrollen dienen bevorzugt allein dem Zweck, den Profilkörper exakt auf dem Bauteil zu positionieren, das heißt, den Profilkörper unmittelbar vor dem Fügen in die exakte Fügeposition zu drücken. Die Führungsrollen können zusätzlich auch eine Greiferfunktion übernehmen und den Profilkörper greifen, halten und positionieren, insbesondere wenn der Profilkörper ein T-Profilkörper ist oder eine andere Form aufweist, die mittels der Führungsrollen sicher gegriffen und gehalten werden kann. Die Führungsrollen können aus einem harten Material oder gehärtet sein. Sie weisen bevorzugt eine ballige Oberfläche auf, so dass sie nur mit einem Anlagepunkt auf der Rollenoberfläche den Profilkörper berühren.

Die Führungsrollen können passive Rollen sein, die drehbar auf einer Achse gelagert sind und durch die Bewegung des Fügewerkzeugs in Rotation versetzt werden. Es kann sich aber auch um aktiv angetriebene Führungsrollen mit einem Antrieb pro Führungsrolle, pro Führungsrollenpaar oder pro Werkzeug handeln.

Um die geforderte Anpassung an unterschiedliche Geometrien zu ermöglichen, müssen die Rollen zueinander in Abstand und Anstellwinkel an die Profilgeometrie verstellbar sein. Die Veränderung des Abstands kann über einen einzigen Antrieb erfolgen, mit dem die Rollen verbunden sind. Zum Beispiel kann der Antrieb eine Gewindestange mit zwei Abschnitten mit gegenläufigen Gewinden antreiben, die die beiden Rollen je nach Drehrichtung der Gewindestange auf einander zu oder voneinander weg bewegt.

Alternativ kann jede Rolle einen eigenen Antrieb aufweisen. Diese beiden Antriebe können sowohl die oben beschriebene synchronisierte Bewegung der beiden Rollen bewirken als auch bei nicht symmetrischen Profilgeometrien die beiden Rollen abgestimmt individuell bewegen. Zum Beispiel bei einem Profilkörper in Form eines rechtwinkligen Dreiecks, der mit einem Schenkel auf dem Bauteil aufliegt, müssen die beiden Rollen unterschiedliche Positionen einnehmen. Gleiches gilt bei Profilkörpern mit abschnittsweise einseitig oder beidseitig wechselnden Formen, aber ebenso bei Profilkörpern oder Stringern, die nicht geradlinig verlaufen, sondern in Kurven.

Neben der linearen Verstellung müssen die Rollen auch verschwenkbar in eine Richtung quer zur Längsrichtung des Profilkörpers sein. Diese Verschwenkung kann unabhängig von der linearen Bewegung durch einen eigenen, zum Beispiel elektrischen Stellantrieb bewirkt werden. Bevorzugt ist es aber, wenn durch geeignete Mittel wie zum Beispiel eine geeignete Mechanik die Linearbewegung der Führungsrollen automatisch in eine Schwenkbewegung umgesetzt wird, das heißt, dass der Grad der Verschwenkung der Rollen von der linear angefahrenen Position abhängig ist. Solch eine gekoppelte Bewegung kann zwangsweise zum Beispiel mittels einer Kulissenführung erreicht werden, in der die schwenkbar mit dem Linearantrieb verbundenen Rollen geführt werden. Bei einer entsprechenden Ausgestaltung der Kulissenführung können die Rollen sich zum Beispiel beim Zusammenfahren aus einer Position, in der sie an den Seiten eines Deltaprofilkörpers anliegen, in eine Position, in der sie an den Seiten eines T-Profilkörpers anliegen, bewegen, das heißt, linear verschieben und um eine Achse parallel zur Längsachse des Profilkörpers verschwenken. Das heißt, die Rollen stehen dann im Wesentlichen senkrecht an dem T-Profilkörper an, oder mit anderen Worten, die Rollen liegen im Wesentlichen parallel zu der Oberfläche des Bauteils.

Anstatt der Kulissenführung können die Bewegungen der Rollen auch mittels anderer bekannter Zwangskopplungen, zum Beispiel mittels eines Gestänges zwangsgekoppelt sein, oder eine Zahnradführung kann die Rollen in der vorbeschriebenen Weise bewegen. Eine Kugelgelenkführung der Rollen oder zylindrisch stufenlos verfahrbare Rollen, die durch verbundene Zylinder bewegt werden, sind auch denkbar.

Zweck der verbundenen Bewegung ist, dass sich die Rollen unterschiedlichen Konturen des Profilkörpers anpassen können und jeden Profilkörper an beiden vom Bauteil abragenden Seiten so führen, dass sie die Position des Profilkörpers oder des Stringers auf dem Bauteil unmittelbar vor dem Verbinden bei einer Korrekturbewegung des Roboters und damit des Werkzeugs korrigieren können. Diese erfindungsgemäße Ausgestaltung des Werkzeugs führt bereits zu einer größeren Positionsgenauigkeit des Profilkörpers oder Stringers auf dem Bauteil als im Allgemeinen bekannt.

Um die Positionsgenauigkeit weiter zu erhöhen, kann das Werkzeug zusätzlich mit einem 6D-Kraftsensor ausgerüstet sein, der bevorzugt an der Schnittstelle zwischen Roboter und Werkzeug mit dem Werkzeug verbunden ist. Es handelt sich dabei um einen monolithischen Messkörper mit drei Messsträngen im Winkel von 120°. Jeder Strang ist mit zwei Halbleiter-Dehnungsmessbrücken bestückt, welche die Verformung im Mikrometerbereich erfassen. Die Ausrüstung des Werkzeugs mit solch einem Kraftsensor ermöglicht eine weitere Verbesserung der Positionsgenauigkeit.

Man unterscheidet bei Robotern zwischen der Wiederholgenauigkeit des Roboters, die bei Systemen aus dem Stand der Technik bereits sehr gut ist, und der absoluten Positioniergenauigkeit, die um Größenordnungen schlechter ist. Die absolute Positioniergenauigkeit hängt zum Beispiel von der Größe des Roboters, von Temperaturänderungen der Umgebung oder einzelner Bauteile und von der Betriebszeit ab. Verbesserungen unmittelbar am Roboter haben zu keiner nennenswerten Verbesserung der absoluten Positioniergenauigkeit geführt.

Um die absolute Positioniergenauigkeit weiter zu verbessern, sind an dem Roboter und/oder dem Werkzeug Sensoren angebracht, mit denen eine Ist-Position des Roboters mittels eines externen Messsystems kontinuierlich erfasst und mit einer vorgegebenen Soll-Position verglichen werden kann. Bei dem externen Messsystem kann es sich um ein iGPS

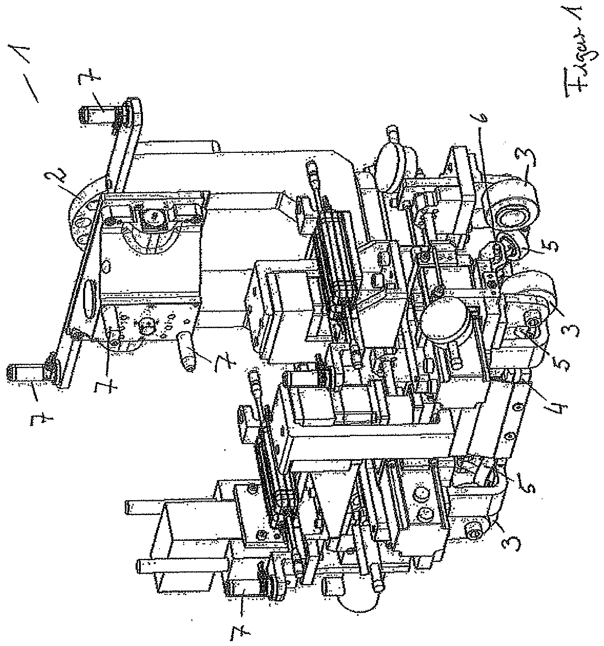

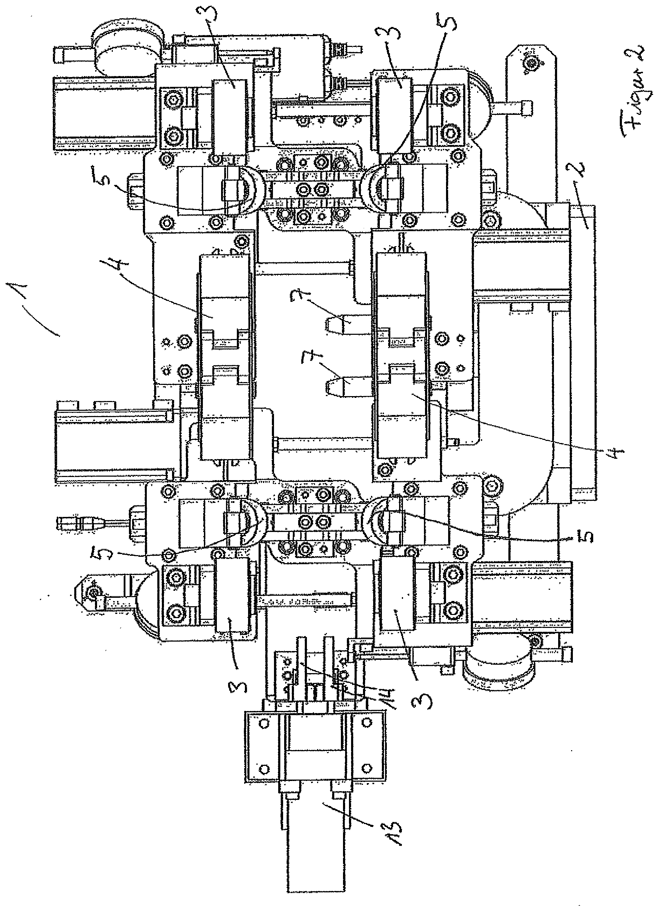

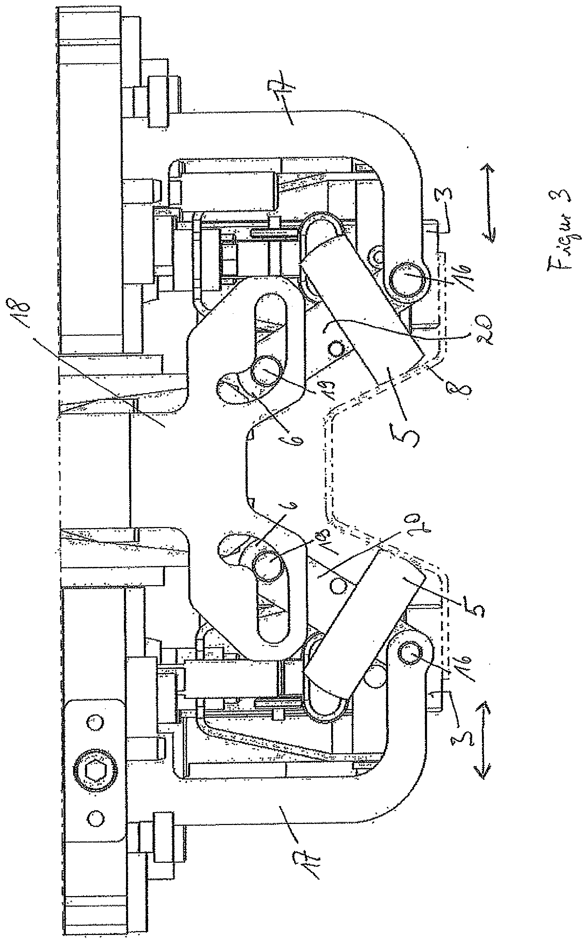

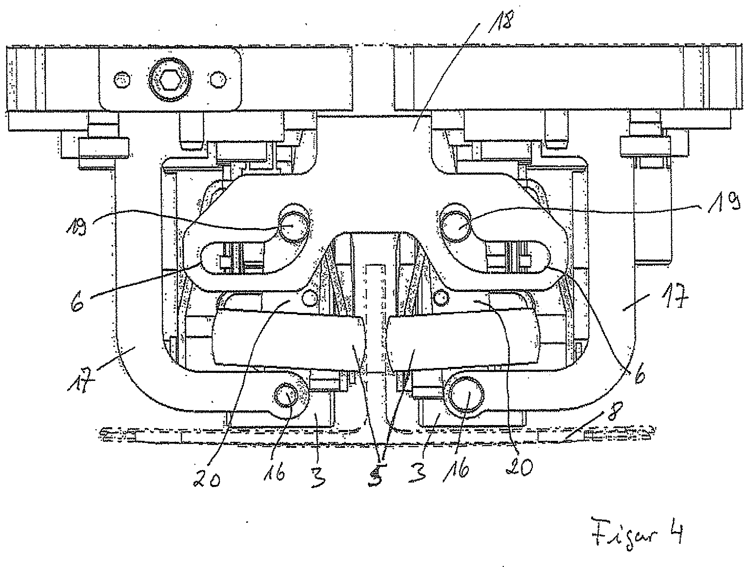

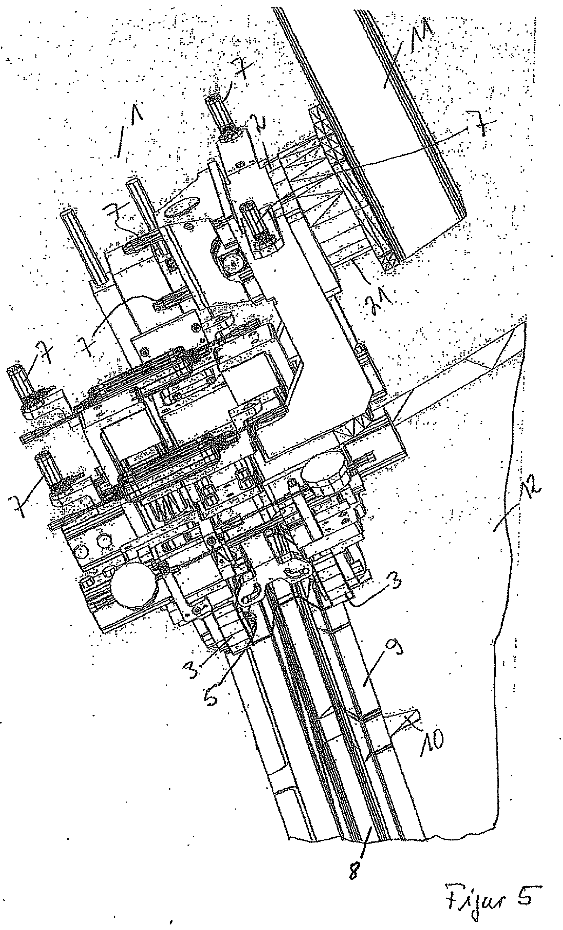

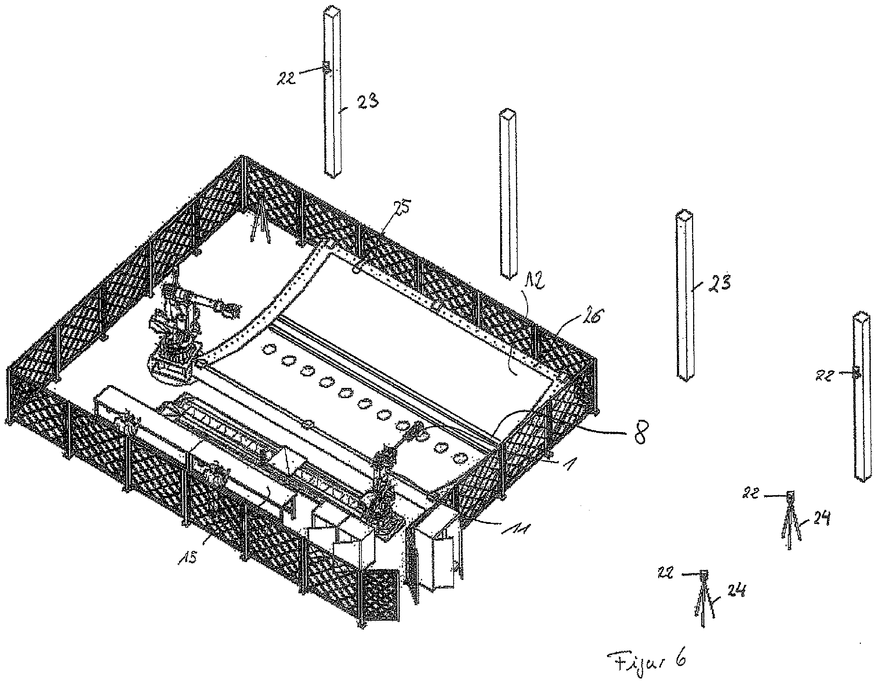

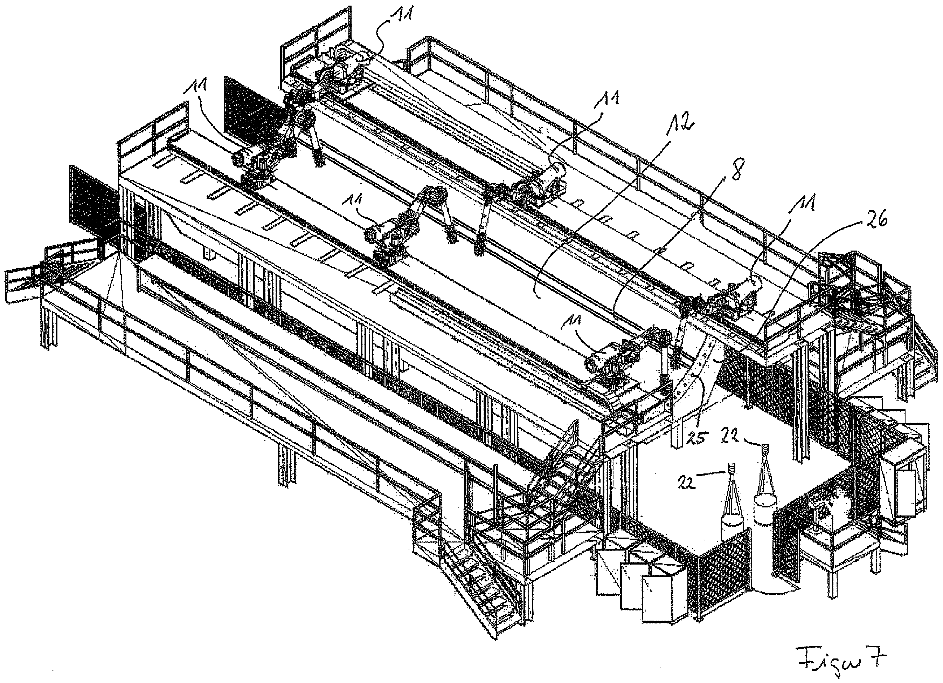

## Patentansprüche

1. Fügewerkzeug (1) zum positionsgenauen Fügen eines Profilkörpers (8) mit einem Bauteil (12), mit
a) einem Andockport (2) zum automatischen Andocken und Abdocken an bzw. von einem Industrieroboter (11),
b) optional einem Greifer (13) zum Greifen, Halten oder Positionieren des Profilkörpers (8),
c) einer Vorrichtung zum Andrücken des Profilkörpers (8) an das Bauteil (12),
d) einer Vorrichtung zum Aktivieren des Profilkörpers (8) und/oder des Bauteils (12) für den Fügevorgang und
e) Führungsrollen (5), die beim Fügen mit einer Abrollfläche an von dem Bauteil (12) abragenden Seiten des Profilkörpers (8) anliegen,
f) wobei die Führungsrollen (5) automatisch an unterschiedliche Profilkörperformen anpassbar sind,
g) und wobei das Bauteil (12) eine instabile großflächige Flächenstruktur ist und der Profilkörper (8) ein Stringer ist, der mit einer ihm zugewandten Oberfläche des Bauteils (12) gefügt wird und die instabile großflächige Flächenstruktur versteift,
h) wobei das Fügewerkzeug (1) zusätzlich mit Sensoren (7) ausgestattet ist, die Teil eines externen Messsystems sind, mit dem eine absolute Positioniergenauigkeit des Fügewerkzeugs (1) verbesserbar ist.

2. Fügewerkzeug (1) nach Anspruch 1, wobei die Führungsrollen (5) zur Anpassung an die unterschiedlichen Profilkörperformen linear aufeinander zu und voneinander weg bewegbar sind.

3. Fügewerkzeug (1) nach einem der vorgehenden Ansprüche, wobei die Führungsrollen (5) zur Anpassung an die unterschiedlichen Profilkörperformen um eine Achse parallel zu einer Längsachse des Profilkörpers (8) verschwenkbar sind.

4. Fügewerkzeug (1) nach einem der vorgehenden Ansprüche, wobei die Führungsrollen (5) einen gemeinsamen Antrieb aufweisen, mit dem sie synchron linear verstellbar und/oder verschwenkbar sind.

5. Fügewerkzeug (1) nach dem vorgehenden Anspruch, wobei die Führungsrollen (5) schwenkbar mit dem Antrieb verbunden sind, der Antrieb ein Linearantrieb ist und die Führungsrollen (5) zwangsgekoppelt sind oder in einer Zwangsführung geführt werden, so dass die Führungsrollen (5) in Abhängigkeit von der Linearbewegung verschwenkbar sind.

6. Fügewerkzeug (1) nach dem vorgehenden Anspruch, wobei es sich bei der Zwangsführung um ein Gestänge, eine Zahnrad- oder Kulissenführung oder eine Kugelgelenkführung handelt.

7. Fügewerkzeug (1) nach einem der vorgehenden Ansprüche, wobei die Führungsrollen (5) eine ballige Rollfläche haben und die Seiten des Profilkörpers (8) nur punktuell berühren.

8. Fügewerkzeug (1) nach einem der vorgehenden Ansprüche, wobei die Vorrichtung zum Andrücken des Profilkörpers (8) aus wenigstens einem Andrückkörper (3), zum Beispiel einer Andrückrolle (3) besteht, die auf die Oberfläche des Profilkörpers (8) oder auf seitlich an dem Profilkörper (8) angeformte Profilkörperflansche (9) oder Verbindungpads (10) drückt.

9. Fügewerkzeug (1) nach dem vorgehenden Anspruch, wobei eine Andrückkraft des wenigstens einen Andrückkörpers (3) einstellbar ist.

10. Fügewerkzeug (1) nach einem der vorgehenden Ansprüche, wobei das Fügewerkzeug (1) zur Verbesserung des positionsgenauen Fügens des Profilkörpers (8) zusätzlich einen 6D-Kraftmesser (21) an dem Andockport (2) bzw. einer Schnittstelle zwischen dem Fügewerkzeug (1) und dem Industrieroboter (11) aufweist.

11. Fügewerkzeug (1) nach dem vorgehenden Anspruch, wobei das externe Messsystem ein internes globales Positionierungssystem, ein Lasertrackingsystem oder ein kameragestütztes Trackingsystem ist, das mittels ortsfester Referenzpunkte (25) in dem Wirkungsbereich des Fügewerkzeugs (1) bzw. des Industrieroboters (11) einen Referenzraum erschafft, in dem die Position des Fügewerkzeugs (1) bzw. des Industrieroboters (11) mit großer Genauigkeit feststellbar ist.

12. Fügewerkzeug (1) nach einem der zwei vorgehenden Ansprüche, wobei eine vom externen Messsystem gemessene Ist-Position des Fügewerkzeugs (1) bzw. des Industrieroboters (11) im Referenzraum mit einer vorgegebenen Soll-Position des Fügewerkzeugs (1) bzw. des Industrieroboters (11) verglichen wird und daraus ein Positionskorrekturwert für den Industrieroboter (11) ermittelbar ist.

13. Fügewerkzeug (1) nach dem vorgehenden Anspruch, wobei ein Abgleich zwischen der Soll-Position des Fügewerkzeugs (1) bzw. des Industrieroboters (11) und der Ist-Position des Fügewerkzeugs (1) bzw. des Industrieroboters (11) im Referenzraum alle 6 bis 12 Millisekunden, bevorzugt alle 8 bis 10 Millisekunden erfolgt.

## Claims

1. A joining tool (1) for joining a profile body (8) to a component part (12) in a precise position, comprising:
a) a docking port (2) for automatically docking with and undocking from an industrial robot (11);
b) optionally, a gripper (13) for gripping, holding or positioning the profile body (8);
c) a device for pressing the profile body (8) onto the component part (12);
d) a device for activating the profile body (8) and/or the component part (12) for the joining process; and
e) guiding rollers (5) comprising a rolling-off surface which abuts sides of the profile body (8) which project from the component part (12) during joining;
f) wherein the guiding rollers (5) can be automatically adapted to different shapes of profile bodies,
g) and wherein the component part (12) is an unstable, large-area planar structure, and the profile body (8) is a stringer which is joined to a surface of the component part (12) facing it and reinforces the unstable, large-area planar structure,
h) wherein the joining tool (1) is additionally fitted with sensors (7) which are part of an external measuring system using which an absolute positioning precision of the joining tool (1) can be improved.

2. The joining tool (1) according to Claim 1, wherein the guiding rollers (5) can be linearly moved towards each other and away from each other in order to adapt to the different shapes of profile bodies.

3. The joining tool (1) according to any one of the preceding claims, wherein the guiding rollers (5) can be pivoted about an axis parallel to a longitudinal axis of the profile body (8) in order to adapt to the different shapes of profile bodies.

4. The joining tool (1) according to any one of the preceding claims, wherein the guiding rollers (5) comprise a common drive using which they can be linearly adjusted and/or pivoted synchronously.

5. The joining tool (1) according to the preceding claim, wherein the guiding rollers (5) are pivotably connected to the drive, the drive is a linear drive, and the guiding rollers (5) are positively coupled or are guided in a positive guide, such that the guiding rollers (5) can be pivoted in accordance with the linear movement.

6. The joining tool (1) according to the preceding claim, wherein the positive guide is an arrangement of rods, a toothed wheel guide or sliding block guide or a ball joint guide.

7. The joining tool (1) according to any one of the preceding claims, wherein the guiding rollers (5) have a spherical rolling surface and contact the sides of the profile body (8) only at points.

8. The joining tool (1) according to any one of the preceding claims, wherein the device for pressing the profile body (8) consists of at least one pressing body (3), for example a pressing roller (3), which presses onto the surface of the profile body (8) or onto profile body flanges (9) or connecting pads (10) which are laterally formed on the profile body (8).

9. The joining tool (1) according to the preceding claim, wherein a pressing force of the at least one pressing body (3) can be set.

10. The joining tool (1) according to any one of the preceding claims, wherein the joining tool (1) additionally comprises a 6D force gauge (21) on the docking port (2) and/or at an interface between the joining tool (1) and the industrial robot (11), in order to the improve the positional precision with which the profile body (8) is joined.

11. The joining tool (1) according to the preceding claim, wherein the external measuring system is an internal global positioning system, a laser tracking system or a camera-assisted tracking system which, by means of spatially fixed reference points (25) in the effective range of the joining tool (1) and/or industrial robot (11), creates a reference space in which the position of the joining tool (1) and/or industrial robot (11) can be determined to a high level of precision.

12. The joining tool (1) according to any one of the preceding two claims, wherein an actual position of the joining tool (1) and/or industrial robot (11) in the reference space, as measured by the external measuring system, is compared with a predetermined target position of the joining tool (1) and/or industrial robot (11), whence a positional correction value for the industrial robot (11) can be ascertained.

13. The joining tool (1) according to the preceding claim, wherein a comparison between the target position of the joining tool (1) and/or industrial robot (11) and the actual position of the joining tool (1) and/or industrial robot (11) in the reference space is made every 6 to 12 milliseconds, preferably every 8 to 10 milliseconds.

## Revendications

1. Outil d'assemblage (1) pour assembler précisément un corps profilé (8) avec un composant (12), comportant :
a) un port d'arrimage (2) pour un arrimage automatique à un robot industriel (11) et un désarrimage de celui-ci,
b) facultativement un organe de préhension (13) pour saisir, maintenir ou positionner le corps profilé (8),
c) un dispositif pour presser le corps profilé (8) sur le composant (12),
d) un dispositif pour activer le corps profilé (8) et/ou le composant (12) pour l'opération d'assemblage et
e) des galets de guidage (5) qui sont en contact avec des côtés du corps profilé (8) faisant saillie à partir du composant (12) lors d'un assemblage avec une surface de roulement,
f) dans lequel les galets de guidage (5) peuvent être automatiquement adaptés aux différentes formes de corps profilé,
g) et dans lequel le composant (12) est une structure de surface instable ayant de grandes dimensions et le corps profilé (8) est une traverse qui est assemblée avec une surface du composant (12) opposée à celle-ci et qui renforce la structure de surface instable ayant de grandes dimensions,
h) dans lequel l'outil d'assemblage (1) est de plus équipé de capteurs (7) qui forment une partie d'un système de mesure externe au moyen duquel une précision de positionnement absolue de l'outil d'assemblage (1) peut être améliorée.

2. Outil d'assemblage (1) selon la revendication 1, dans lequel les galets de guidage (5) peuvent être rapprochés et éloignés linéairement l'un de l'autre pour s'adapter aux différentes formes de corps profilé.

3. Outil d'assemblage (1) selon l'une des revendications précédentes, dans lequel les galets de guidage (5) peuvent pivoter autour d'un axe parallèle à un axe longitudinal du corps profilé (8) pour s'adapter aux différentes formes de corps profilé.

4. Outil d'assemblage (1) selon l'une des revendications précédentes, dans lequel les galets de guidage (5) comportent un mécanisme d'entraînement commun au moyen duquel ils peuvent être réglés et/ou pivoter linéairement de manière synchronisée.

5. Outil d'assemblage (1) selon la revendication précédente, dans lequel les galets de guidage (5) sont reliés de façon à pouvoir pivoter avec le mécanisme d'entraînement, le mécanisme d'entraînement est un mécanisme d'entraînement linéaire et les galets de guidage (5) sont couplés de manière forcée ou sont guidés par un guidage forcé de sorte que les galets de guidage (5) peuvent pivoter en fonction du mouvement linéaire.

6. Outil d'assemblage (1) selon la revendication précédente, dans lequel le guidage forcé est une tringlerie, un guidage par roue dentée ou par coulisse ou un guidage par articulation sphérique.

7. Outil d'assemblage (1) selon l'une des revendications précédentes, dans lequel les galets de guidage (5) ont une surface de roulement bombée et les côtés du corps profilé (8) sont en contact uniquement ponctuel.

8. Outil d'assemblage (1) selon l'une des revendications précédentes, dans lequel le dispositif de pression du corps profilé (8) est constitué d'au moins un corps presseur (3), par exemple un galet presseur (3), qui exerce une pression sur la surface du corps profilé (8) ou sur un flasque de corps profilé (9) formé latéralement sur le corps profilé (8) ou sur la surface du plot de liaison (10).

9. Outil d'assemblage (1) selon la revendication précédente, dans lequel une force de pression du au moins un corps presseur (3) est réglable.

10. Outil d'assemblage (1) selon l'une des revendications précédentes, dans lequel l'outil d'assemblage (1) comporte en plus un mesureur de force en 6D (21) sur le port d'arrimage (2) ou une interface entre l'outil d'assemblage (1) et le robot industriel (11) afin d'améliorer la précision d'assemblage du corps profilé (8).

11. Outil d'assemblage (1) selon la revendication précédente, dans lequel le système de mesure externe est un système interne de positionnement global, un système de laser de repérage ou un système de repérage assisté par caméra, qui crée un espace de référence au moyen de points de référence fixes (25) dans la zone active de l'outil d'assemblage (1) ou du robot industriel (11), zone de référence dans laquelle la position de l'outil d'assemblage (1) ou du robot industriel (11) peut être déterminée avec une grande précision.

12. Outil d'assemblage (1) selon l'une des deux revendications précédentes, dans lequel une position réelle de l'outil d'assemblage (1) ou du robot industriel (11) dans l'espace de référence, mesurée par l'appareil de mesure externe, est comparée à une position de consigne prédéfinie de l'outil d'assemblage (1) ou du robot industriel (11), et une valeur de correction de position peut ensuite être déterminée pour le robot industriel (11).

13. Outil d'assemblage (1) selon la revendication précédente, dans lequel une comparaison entre la position de consigne de l'outil d'assemblage (1) ou du robot industriel (11) et la position réelle de l'outil d'assemblage (1) ou du robot industriel (11) dans l'espace de référence a lieu toutes les 6 à 12 millisecondes, de préférence toutes les 8 à 10 millisecondes.
